# EUROPÄISCHE PATENTANMELDUNG

(11) **EP 3 202 710 A1**
(43) Veröffentlichungstag der Anmeldung: **09.08.2017**
(21) Anmeldenummer: 16154690.8
(22) Anmeldetag: 08.02.2016
(51) Int. Cl.: C01B 3/34, B01J 8/02

(54) **VERFAHREN ZUR CHEMISCHEN UMSETZUNG EINES ODER MEHRERER KOHLENWASSERSTOFFREAKTANDEN**

(71) Anmelder: Linde Aktiengesellschaft, 80331 München (DE)
(72) Erfinder: Zimmermann, Heinz, 81476 München (DE); Schmidt, Gunther, 82041 Deisenhofen (DE)
(74) Vertreter: m patent group

(57) **Zusammenfassung**

Es wird ein Verfahren (10) zur chemischen Umsetzung eines oder mehrerer Kohlenwasserstoffreaktanden unter Zufuhr von Wasserdampf und Wärme vorgeschlagen, wobei vorgesehen ist, dass der Wasserdampf und die Wärme zumindest zu einem Teil unter Verwendung zumindest eines Brenners (1) bereitgestellt werden, welchem ein überwiegend oder ausschließlich Sauerstoff enthaltender erster Fluidstrom (a), ein überwiegend oder ausschließlich Wasserstoff enthaltender zweiter Fluidstrom (b) und ein überwiegend oder ausschließlich Wasserdampf enthaltender dritter Fluidstrom (c) zugeführt wird.

## Beschreibung

Die Erfindung betrifft ein Verfahren zur chemischen Umsetzung eines oder mehrerer Kohlenwasserstoffreaktanden unter Zufuhr von Wasserdampf und Wärme in einem Reaktor gemäß dem Oberbegriff des Patentanspruchs 1.

### Stand der Technik

In der chemischen Industrie werden eine Reihe von Verfahren eingesetzt, in denen Kohlenwasserstoffreaktanden unter Zufuhr von Wasserdampf und Wärme in einem Reaktor umgesetzt werden. Beispiele hierfür sind Dampfspaltverfahren (engl. Steam Cracking), Dampfreformierungsverfahren (engl. Steam Reforming) und Verfahren zur katalytischen Dehydrierung, beispielsweise von Butan (BDH) und/oder Propan (PDH). Für technische Details entsprechender Verfahren sei auf einschlägige Lehrbücher und Nachschlagewerke verwiesen, beispielsweise die Artikel "Ethylene", "Gas Production" und "Propene" in Ullmann's Encyclopedia of Industrial Chemistry.

Zur Bereitstellung der Wärme in solchen Verfahren werden typischerweise Brenner eingesetzt, die unter Verwendung geeigneter Brennstoffe auf Kohlenwasserstoffbasis, insbesondere entsprechender Brenngase, betrieben werden. Ein Nachteil, der sich aus der Verwendung derartiger Brenner bzw. aus der Verwendung entsprechender Brennstoffe ergibt, ist daher naturgemäß der, dass bei der Verbrennung Emissionen wie Stickoxide und Kohlendioxid entstehen. Ein weiterer Nachteil ist der, dass hierbei nur eine teilweise Nutzung der erzeugten Wärme möglich ist, weil sowohl die Wärmeübertragung als auch die thermischen Wirkungsgrade in den typischerweise für die genannten Verfahren eingesetzten Reaktoren begrenzt sind. Letztere liegen typischerweise bei nur ca. 40 bis 45%.

Die Erfindung stellt sich daher die Aufgabe, entsprechende Verfahren zur chemischen Umsetzung eines oder mehrerer Kohlenwasserstoffreaktanden, insbesondere in Bezug auf die Effizienz der Wärmezufuhr, zu verbessern.

### $Offenbarung der Erfindung

Diese Aufgabe wird durch ein Verfahren zur chemischen Umsetzung eines oder mehrerer Kohlenwasserstoffreaktanden unter Zufuhr von Wasserdampf und Wärme in einem Reaktor gemäß dem Oberbegriff des Patentanspruchs 1 gelöst. Ausgestaltungen sind jeweils Gegenstand der abhängigen Patentansprüche und der nachfolgenden Beschreibung.

### Vorteile der Erfindung

Die vorliegende Erfindung beruht auf der Erkenntnis, dass es besonders vorteilhaft ist, in einem Verfahren zur chemischen Umsetzung eines oder mehrere Kohlenwasserstoffreaktanden, die unter Zufuhr von Wasserdampf und Wärme erfolgt, den Wasserdampf und die Wärme zumindest zu einem Teil unter Verwendung zumindest eines Brenners bereitzustellen, in welchem Wasserstoff mit Sauerstoff verbrannt wird, und in welchem mittels der bei der Verbrennung entstehenden Verbrennungswärme ein Dampfstrom erwärmt wird. Ist nachfolgend von "einem Brenner" die Rede, versteht sich, dass sich die entsprechenden Erläuterungen auch auf die Verwendung von zwei oder mehr Brennern beziehen. Grundsätzlich können im Rahmen der vorliegenden Erfindung ein oder mehrere Brenner eingesetzt werden; die Erfindung ist außerdem nicht auf die Wasserdampf- und Wärmezufuhr ausschließlich mittels eines oder mehrerer entsprechender Brenner beschränkt. Grundsätzlich können im Rahmen der vorliegenden Erfindung auch andere Quellen für Wasserdampf und/oder Wärme genutzt werden, beispielsweise weitere, aber konventionelle Brenner und/oder Dampferzeugungseinrichtungen.

Dem Brenner werden im Rahmen der vorliegenden Erfindung dabei ein überwiegend oder ausschließlich Sauerstoff enthaltender erster Fluidstrom, ein überwiegend oder ausschließlich Wasserstoff enthaltender zweiter Fluidstrom und ein überwiegend oder ausschließlich Wasserdampf enthaltender dritter Fluidstrom zugeführt wird. Brenner, denen entsprechende Fluidströme zugeführt werden können, werden in bestimmter baulicher Ausgestaltung auch als Jetbrenner bezeichnet und sind grundsätzlich aus dem Stand der Technik bekannt. Für technische Details entsprechender Brenner sei auf einschlägige Patent- und Fachliteratur, beispielsweise die US 2008/0083537 A1 und die US 4,074,708 A, verwiesen.

Weil in dem erfindungsgemäß eingesetzten Brenner vorteilhafterweise lediglich Wasserstoff mit Sauerstoff verbrannt wird, jedoch kein Stickstoff vorhanden ist, stellt sich das eingangs erläuterte Problem der Stickoxidbildung hier nicht mehr. Es sei jedoch ausdrücklich betont, dass, wenn beispielsweise aufgrund der verwendeten Temperaturen, eine geringere Gefahr eine Stickoxidbildung besteht, als erster Fluidstrom auch ein Fluidstrom eingesetzt werden kann, der nicht ausschließlich aus Sauerstoff besteht, sondern auch einen Teil Stickstoff enthalten kann. Hierbei kann es sich beispielsweise um "unscharf" zerlegte Luft aus einer Luftzerlegungsanlage handeln, die zu diesem Zweck energetisch besonders günstig betrieben werden kann. Insbesondere werden in dem erfindungsgemäß eingesetzten Brenner jedoch keine fossilen bzw. kohlenwasserstoffbasierten Brennstoffe verbrannt, so dass sich keine Kohlendioxidemissionen ergeben.

Besonders vorteilhaft ist es, wie auch nachfolgend erläutert, dass durch die Menge des in Form des dritten Fluidstroms zugegebenen Wasserdampfs die mittels des Brenners bereitgestellte Wärme dosiert und das Temperaturniveau eingestellt werden kann. Mittels des erfindungsgemäßen Verfahrens kann ferner die mit einem entsprechenden Brenner eingebrachte Wärme im Vergleich zu einem herkömmlichen Brenner besser genutzt werden. Dies ist darauf zurückzuführen, dass die Wärme der Verbrennung des Wasserstoffs vollständig in den Reaktor eingebracht wird und nicht durch einen limitierten Wärmeübergang durch eine Reaktorwand erfolgt. Herkömmlicherweise wird die die fühlbare Wärme der Verbrennungsabgase, im Gegensatz zur vorliegenden Erfindung, überwiegend nicht in denReaktor übertragen.

Wie erwähnt, sind entsprechende Brenner grundsätzlich aus dem Stand der Technik bekannt. Als besonders vorteilhaft erweisen sich dabei Brenner, denen der erste und/oder der zweite und/oder dritte Fluidstrom dem oder zumindest einem der Brenner konzentrisch zueinander zugeführt werden. Eine entsprechende konzentrische Zuführung insbesondere des dritten Fluidstroms gegenüber dem ersten und dem zweiten Fluidstrom ermöglicht eine besonders günstige Übertragung der Wärme auf den dritten Fluidstrom bzw. auf dessen Wasserdampf.

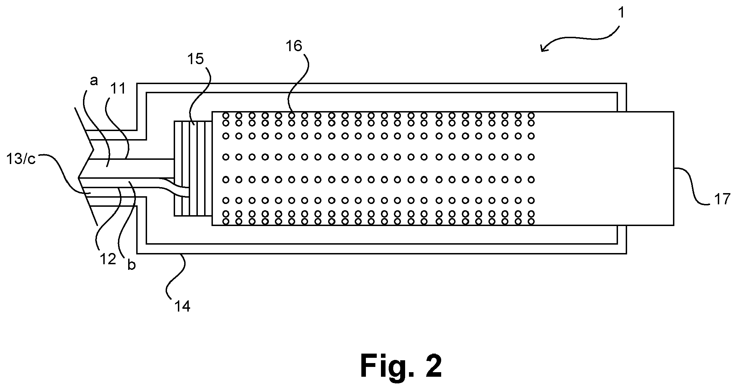

Mit besonderem Vorteil wird dabei unter Verwendung des ersten und des zweiten Fluidstroms, insbesondere unter Einsatz einer oder mehrerer Brennerdüsen, in dem oder in zumindest einem der Brenner zumindest eine zentrale Brennflamme erzeugt, die von dem dritten Fluidstrom konzentrisch umströmt wird. Wie auch unter Bezugnahme auf die beigefügte Figur 2 gezeigt, kann eine derartige konzentrische Umströmung einer oder mehrere zentraler Brennerflammen insbesondere durch Verwendung eines perforierten Mantelrohrs realisiert werden, in das der Wasserdampf des dritten Fluidstroms eintritt, und in welches er von der Brennerflamme bzw. deren Abgas eingesaugt und dort mitgerissen wird.

Als besonders vorteilhaft erweist es sich also, wenn der dritte Fluidstrom zumindest in einem Abschnitt des Brenners oder eines der Brenner unter Verwendung eines perforierten Mantelrohrs geführt wird, die die Brennerflamme umgibt. Auf diese Weise kann sowohl eine direkte (konvektive) Wärmeübertragung auf den Wasserdampf als auch eine Erwärmung mittels Strahlungswärme erfolgen.

Vorteilhafterweise wird im Rahmen der vorliegenden Erfindung überhitzter Dampf gebildet. Der dritte Fluidstrom wird also in diesem Fall überwiegend oder ausschließlich aus Sattdampf gebildet, der in dem Brenner oder zumindest einem der Brenner überhitzt wird. Anstelle einer Erhitzung kann jedoch auch eine Temperierung auf eine für die chemische Umsetzung geeignete Temperatur erfolgen.

Mit besonderem Vorteil kann dabei eine Menge der mittels des Brenners bereitgestellten Wärme zumindest zum Teil durch Einstellen einer Menge des über den dritten Fluidstrom zugeführten Wasserdampfs eingestellt werden. Auf diese Weise ist ein exakter und dosierter Energieeintrag in die nachgeschaltete chemische Umsetzung möglich. Eine Regeleinrichtung, die in einer entsprechenden Anlage eingesetzt werden kann, kann die Menge und die Temperatur des Wasserdampfs entsprechend regeln.

Vorteilhafterweise werden im Rahmen der vorliegenden Erfindung eine Menge des über den ersten Fluidstrom zugeführten Sauerstoffs und eine Menge des über den zweiten Fluidstrom zugeführten Wasserstoffs zur Reaktion von Wasser durch Verbrennung in einem stöchiometrischen Verhältnis zueinander eingestellt. Auf diese Weise kann beispielsweise vermieden werden, dass überschüssiger Sauerstoff und/oder überschüssiger Wasserstoff in der nachfolgenden chemischen Reaktion stören können. Alternativ dazu kann jedoch auch vorgesehen sein, eine der Komponenten in überstöchiometrischer Menge einzusetzen. Auf diese Weise kann Sauerstoff oder Wasserstoff für die Reaktion zur Verfügung gestellt und, ähnlich wie der Dampf, gleichzeitig vorgewärmt werden.

Im Rahmen der vorliegenden Erfindung kann wenigstens ein adiabat betriebener Reaktor eingesetzt werden. Es können auch wenigstens zwei Reaktoren und/oder ein in wenigstens zwei Bereiche unterteilter Reaktor verwendet werden, wobei die Reaktoren oder die Bereiche des Reaktors jeweils mit zumindest einem der Brenner beheizt werden. Durch diese Maßnahme ist es möglich insbesondere im Falle von stark endothermen Reaktionen eine optimale Temperaturführung durch gestufte Wärmezufuhr zu errreichen.

Im Rahmen der vorliegenden Erfindung kann eine chemische Reaktion eingesetzt werden, in der Wasserstoff gebildet wird, beispielsweise in einem Dampfreformierungsverfahren. Dieser Wasserstoff kann gemäß einer besonders bevorzugten Ausführungsform der Erfindung zumindest zum Teil abgetrennt und in den zweiten Fluidstrom überführt werden. Auf diese Weise ist eine sinnvolle Nutzung des in der chemischen Reaktion anfallenden Wasserstoffs möglich.

In entsprechender Weise kann auch nach der chemischen Umsetzung verbleibender Wasserdampf zumindest zum Teil abgetrennt und in den dritten Fluidstrom überführt werden. Hierdurch erübrigt sich beispielsweise eine erneute Erzeugung von Wasserdampf mit entsprechendem Energieaufwand.

Vorteilhafterweise kann in der chemischen Umsetzung, beispielsweise in einem Dampfspaltverfahren, auch Methan gebildet werden, das zumindest zum Teil abgetrennt und bei der Bereitstellung des ersten Fluidstroms energetisch genutzt werden kann. Beispielsweise kann mit entsprechendem Methan eine Gasturbine betrieben werden, die einen Verdichter antreibt, welcher wiederum zum Betrieb einer zur Bereitstellung des ersten Fluidstroms eingesetzten Luftzerlegungsanlage verwendet werden kann.

Im Rahmen der vorliegenden Erfindung können katalytisch oder nichtkatalytische Verfahren zum Einsatz kommen. Wie erwähnt, kann die vorliegende Erfindung beispielsweise zusammen mit einem Verfahren der Dampfreformierung oder einer Dehydrierung wenigstens eines Kohlenwasserstoffs, beispielsweise einer Propan- oder Butandehydrierung, erfolgen. Generell eignet sich die vorliegende Erfindung für Reaktionen, die bei höheren Temperaturen, insbesondere auf Temperaturniveaus von mehr als 550 °C, unter Beteiligung von Wasserdampf erfolgen.

Wie ebenfalls erwähnt, kann die vorliegende Erfindung jedoch auch im Zusammenhang mit nichtkatalytischen Verfahren, beispielsweise Dampfspaltverfahren, zum Einsatz kommen. Die im Rahmen der vorliegenden Erfindung eingesetzten Kohlenwasserstoffreaktanden umfassen beispielsweise Methan, das für eine Dampfreformierung oder eine Acetylenherstellung verwendet werden kann, Ethan, Propan, Butan, Flüssigerdgas, Naphtha, Gasöl oder Hydrocrackerrückstände (engl. Hydrocracker Residue, HCR). Insbesondere die Dampfreformierung eignet sich zur Bearbeitung sämtlicher dieser Kohlenwasserstoffreaktanden.

Die Erfindung wird nachfolgend unter Bezugnahme auf die beigefügten Zeichnungen näher erläutert.

### Kurze Beschreibung der Zeichnungen

Figur 1 veranschaulicht ein Verfahren gemäß einer Ausführungsform der Erfindung.
Figur 2 veranschaulicht einen Brenner zum Einsatz in einem Verfahren gemäß einer Ausführungsform der Erfindung.

In den Figuren sind einander entsprechende Elemente mit identischen Bezugszeichen bezeichnet und werden der Übersichtlichkeit halber nicht wiederholt veranschaulicht.

### Ausführliche Beschreibung der Zeichnungen

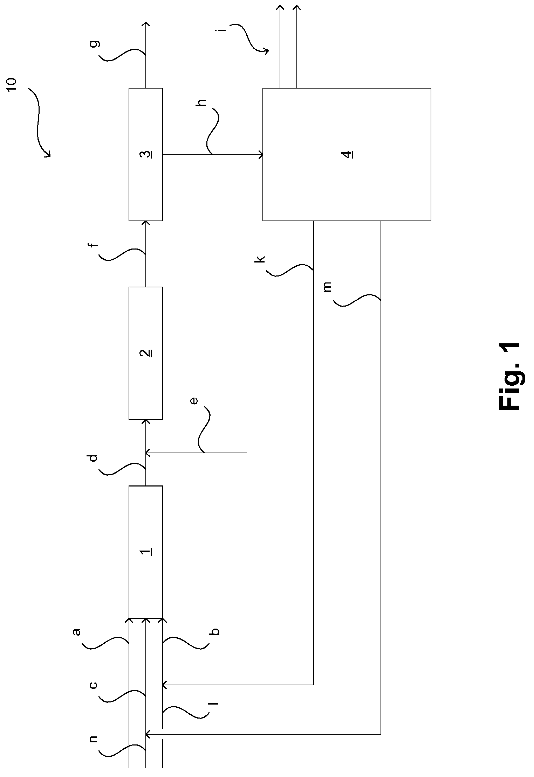

In Figur 1 ist ein Verfahren zur chemischen Umsetzung eines oder mehrerer Kohlenwasserstoffreaktanden unter Zufuhr von Wasserstoff und Wärme gemäß einer besonders bevorzugten Ausführungsform der Erfindung in Form eines schematischen Ablaufplans veranschaulicht und insgesamt mit 10 bezeichnet.

Das Verfahren 10 umfasst die Verwendung eines Brenners, hier schematisch mit 1 bezeichnet, eines insbesondere adiabat betriebenen Reaktors, hier vereinfacht mit 2 veranschaulicht, sowie einer Energierückgewinnungseinrichtung, hier vereinfacht mit 3 veranschaulicht. Ferner umfasst das Verfahren 10 die Verwendung einer Trenneinrichtung 4, in welcher ein Abstrom des Reaktors 2 zumindest teilweise in seine Komponenten aufgetrennt werden kann.

In der in Figur 1 veranschaulichten Ausführungsform des erfindungsgemäßen Verfahrens 10 werden dem Brenner ein überwiegend oder ausschließlich Sauerstoff enthaltender erster Fluidstrom, hier mit a bezeichnet, ein überwiegend oder ausschließlich Wasserstoff enthaltender zweiter Fluidstrom, hier mit b bezeichnet, sowie ein überwiegend oder ausschließlich Wasserdampf enthaltender dritter Fluidstrom, hier mit c bezeichnet, zugeführt. In dem Brenner 1 wird der Wasserstoff des Fluidstroms b, beispielsweise aber nicht notwendigerweise stöchiometrisch, mit Sauerstoff des Fluidstroms a, umgesetzt. Wie mehrfach erläutert, werden dabei eine oder mehrere Brennerflammen erzeugt, die von dem Wasserdampf des Fluidstroms c umströmt und auf diese Weise erhitzt werden.

Der auf diese Weise erhitzte Wasserdampf des Fluidstroms c strömt, zusammen mit dem bei der Verbrennung des Wasserstoffs des Fluidstroms a und des Fluidstroms b gebildeten Wasserdampf, in Form eines Fluidstroms d ab. Die fühlbare Wärme und die Temperatur des Fluidstroms d kann dabei, wie ebenfalls mehrfach erwähnt, insbesondere auch durch die Menge des über den Fluidstrom c zugeführten Wasserdampfs geregelt werden.

In Form eines Fluidstroms e werden ein oder mehrere Kohlenwasserstoffreaktanden und gegebenenfalls weitere für die in dem Verfahren 10 durchgeführte Reaktion erforderliche Komponenten dem Fluidstrom d zugespeist oder zusammen mit diesem in den Reaktor 2 eingespeist.

Der Reaktor 2 wird, wie erwähnt, insbesondere als adiabater Reaktor betrieben, d.h. dem Reaktor 2 wird bis auf die Wärme, die über den Fluidstrom d in den Reaktor übertragen wird, keine weitere Wärme zugeführt. Die Temperatur in dem Reaktor verändert sich damit in Strömungsrichtung. Je nach Art der chemischen Umsetzung in dem Verfahren 10 kann der Reaktor beispielsweise als Rohrreaktor ausgebildet sein, der katalytisch und/oder nichtkatalytisch betrieben werden kann. In dem Reaktor 2 können insbesondere auch mehrere Reaktionszonen bzw. Reaktionsbereiche vorgesehen sein, die unterschiedliche chemische Reaktionen begünstigen. Ebenso ist es, wie erwähnt, möglich, den Reaktor 2 in mehrere Reaktoren aufzuteilen, und so für im Falle von stark endothermen Reaktionen eine optimale Temperaturführung durch gestufte Wärmezufuhr zu errreichen.

Aus dem Reaktor 2 wird ein Fluidstrom f abgezogen, der im dargestellten Beispiel der Energierückgewinnungseinheit 3 zugeführt wird. Die Energierückgewinnungseinheit 3 kann beispielsweise einen Abwärmedampferzeuger umfassen. In der Energierückgewinnungseinheit 3 kann beispielsweise auch unter Verwendung entsprechenden Dampfs elektrische Energie erzeugt werden. In der Energierückgewinnungseinheit 3 rückgewonnene aus dieser ausgeführte Energie ist in Figur 1 mit einem Pfeil g veranschaulicht.

Aus der Energierückgewinnungseinheit 3 wird ein Fluidstrom h in die Trenneinrichtung 4 überführt, in welcher ein oder mehrere Produktströme, beispielsweise olefinhaltige Fluidströme, aus dem Fluidstrom h abgetrennt werden können. Derartige Produktströme sind in Figur 1 mit i bezeichnet. Welche Produktströme i gebildet werden, hängt von der in dem Reaktor 2 durchgeführten chemischen Reaktion ab. Neben dem gezeigten Produktströmen und weiteren Fluidströmen können auch zusätzliche Fluidströme gebildet werden, die als Produkte verwendet und/oder verworfen werden können.

Insbesondere wird in der Trenneinrichtung 4 ein überwiegend oder ausschließlich Wasserstoff enthaltender Fluidstrom k abgetrennt. Dieser kann mit einem ebenfalls zur Bereitstellung des zweiten Fluidstroms b verwendeten, überwiegend oder ausschließlich Wasserstoff enthaltenden Fluidstrom I vereinigt werden. Auf diese Weise kann der in der Trenneinrichtung 4 gewonnene Wasserstoff in dem Verfahren selbst genutzt werden.

Ferner wird in der Trenneinrichtung 4 im dargestellten Beispiel ein überwiegend oder ausschließlich Wasserdampf enthaltender Fluidstrom m gebildet. Dieser kann mit einem zur Bildung des dritten Fluidstroms c verwendeten Fluidstroms n vereinigt werden. Auf diese Weise kann der Wasserdampf in dem erfindungsgemäßen Verfahren zurückgewonnen werden.

In Figur 2 ist ein Brenner zum Einsatz in einem Verfahren gemäß einer besonders bevorzugten Ausführungsform der Erfindung, beispielsweise dem Verfahren 10 der Figur 1, schematisch dargestellt. Wie dort ist der Brenner mit 1 bezeichnet.

Über eine geeignete Leitung 11 kann dem Brenner 10 der überwiegend oder ausschließlich Sauerstoff enthaltende erste Fluidstrom a zugeführt werden. Entsprechend kann dem Brenner über eine weitere Leitung 12 der überwiegend oder ausschließlich Wasserstoff enthaltende zweite Fluidstrom zugeführt werden. Der Brenner 10 umfasst ferner im dargestellten Beispiel einen die erste Leitung 11 und die zweite Leitung 12 konzentrisch umgebenden Bereich 13, in dem der überwiegend oder ausschließlich Wasserdampf enthaltende dritte Fluidstrom c geführt wird. Der die erste Leitung 11 und die zweite Leitung 12 umgebende Bereich 13 wird im dargestellten Beispiel durch eine Außenhülle 14 des Brenners gebildet, die sich in Strömungsrichtung des Fluidstroms c erweitert. Der Brenner 10 umfasst eine Düseneinheit 15, in die über die erste Leitung 11 der erste Fluidstrom a, und über die zweite Leitung 12 der zweite Fluidstrom b eingespeist werden. Mittels der Düseneinheit 15 werden ein oder mehrere Brennerflammen erzeugt.

Die Brennerflamme(n) brennt bzw. brennen innerhalb eines Mantelrohrs 16, das eine Perforierung aufweist und den Raum, innerhalb dessen der dritte Fluidstrom c geführt wird, gegenüber dem Bereich der Brennerflamme(n) abgrenzt. Das Mantelrohr 16 weist eine distale Öffnung 17 auf, über die Abgas des Brenners austreten kann. Über die Perforierung des Mantelrohrs 16 kann der Wasserdampf des dritten Fluidstroms c in das Mantelrohr 16 eintreten und wird dort und durch von dem Mantelrohr 16 abgestrahlter Strahlungswärme mittels der Brennerflamme(n) erwärmt. Durch Einstellen einer Menge des über den dritten Fluidstrom zugeführten Wasserdampfs kann eine Temperatur des Brennerabgases und des Wasserdampfs, die aus der Öffnung 17 austreten, eingestellt werden.

## Patentansprüche

1. Verfahren (10) zur chemischen Umsetzung eines oder mehrerer Kohlenwasserstoffreaktanden unter Zufuhr von Wasserdampf und Wärme, **dadurch gekennzeichnet, dass** der Wasserdampf und die Wärme zumindest zu einem Teil unter Verwendung zumindest eines Brenners (1) bereitgestellt werden, welchem ein überwiegend oder ausschließlich Sauerstoff enthaltender erster Fluidstrom (a), ein überwiegend oder ausschließlich Wasserstoff enthaltender zweiter Fluidstrom (b) und ein überwiegend oder ausschließlich Wasserdampf enthaltender dritter Fluidstrom (c) zugeführt wird.

2. Verfahren (10) nach Anspruch 1, bei dem der erste und/oder der zweite und/oder der dritte Fluidstrom (a, b, c) dem Brenner (1) oder zumindest einem der Brenner (1) konzentrisch zueinander zugeführt werden.

3. Verfahren (10) nach Anspruch 1 oder Anspruch 2, bei dem unter Verwendung des ersten und des zweiten Fluidstroms (a, b) in dem Brenner (1) oder in zumindest einem der Brenner (1) zumindest eine zentrale Brennflamme erzeugt wird, die von dem dritten Fluidstrom (c) konzentrisch umströmt wird.

4. Verfahren (10) nach Anspruch 3, bei dem der dritte Fluidstrom (c) zumindest in einem Abschnitt des Brenners (1) oder eines der Brenner (1) unter Verwendung eines perforierten Mantelrohrs (16) geführt wird, die die Brennerflamme umgibt.

5. Verfahren (10) nach einem der vorstehenden Ansprüche, bei dem der dritte Fluidstrom überwiegend oder ausschließlich aus Sattdampf gebildet wird, welcher in dem Brenner (1) oder in zumindest einem der Brenner (1) überhitzt wird.

6. Verfahren (10) nach einem der vorstehenden Ansprüche, bei dem eine Menge der bereitgestellten Wärme zumindest zum Teil durch Einstellen einer Menge des über den dritten Fluidstrom (c) zugeführten Wasserdampfs eingestellt wird.

7. Verfahren (10) nach einem der vorstehenden Ansprüche, bei dem eine Menge des über den ersten Fluidstrom (a) zugeführten Sauerstoffs und eine Menge des über den zweiten Fluidstrom (b) zugeführten Wasserstoffs zur Reaktion zu Wasser in einem stöchiometrischen Verhältnis zueinander eingestellt werden.

8. Verfahren (10) nach einem der vorstehenden Ansprüche, bei dem bei der chemischen Umsetzung Wasserstoff gebildet wird, der zumindest zum Teil abgetrennt und in den zweiten Fluidstrom (b) überführt wird.

9. Verfahren (10) nach einem der vorstehenden Ansprüche, bei dem nach der chemischen Umsetzung verbleibender Wasserdampf zumindest zum Teil abgetrennt und in den dritten Fluidstrom (b) überführt wird.

10. Verfahren (10) nach einem der vorstehenden Ansprüche, bei dem bei der chemischen Umsetzung Methan gebildet wird, das zumindest zum Teil abgetrennt und bei der Bereitstellung des ersten Fluidstroms (a) energetisch genutzt wird.

11. Verfahren (10) nach einem der vorstehenden Ansprüche, bei für die chemische Umsetzung wenigstens ein adiabat betriebener Reaktor (2) verwendet wird.

12. Verfahren (10) nach Anspruch 11, bei dem wenigstens zwei Reaktoren (2) und/oder ein in wenigstens zwei Bereiche unterteilter Reaktor (2) verwendet werden, wobei die Reaktoren (2) oder die Bereiche des Reaktors (2) jeweils mit zumindest einem der Brenner beheizt werden.

13. Verfahren (10) nach einem der vorstehenden Ansprüche, bei dem die chemische Umsetzung unter Verwendung eines Katalysators durchgeführt wird.

14. Verfahren (10) nach Anspruch 13, bei dem die chemische Umsetzung eine Dehydrierung des wenigstens einen Kohlenwasserstoffs oder eine Dampfreformierung umfasst.

15. Verfahren (10) nach einem der Ansprüche 1 bis 12, bei dem die chemische Umsetzung ein nichtkatalytisches Spalten des wenigstens einen Kohlenwasserstoffs umfasst.
